# EUROPEAN PATENT APPLICATION

(11) **EP 2 323 357 A1**
(43) Date of publication of application: **18.05.2011**
(21) Application number: 09176265.8
(22) Date of filing: 17.11.2009
(51) Int. Cl.: H04M 1/725, G06F 17/21

(54) **A mobile wireless communications device displaying textual content using rapid serial visual presentation and associated methods**

(71) Applicant: RESEARCH IN MOTION LIMITED, Waterloo, Ontario N2L 3W8 (CA)
(72) Inventor: Hanson, Daniel, Waterloo Ontario N2L 3W8 (CA)
(74) Representative: Fennell, Gareth Charles

(57) **Abstract**

A mobile wireless communications device (12) includes a processor (17) cooperating with a wireless transceiver (14) for downloading textual content including a plurality of words and storing the textual content in a memory (15). The processor also cooperates with the memory for generating successive fragments of the textual content, each fragment including at least one word. The processor may display on the display (13) a notification that a rapid serial visual presentation (RSVP) display mode has been selected. Moreover, the processor may use RSVP for displaying on the display the successive fragments of the textual content based upon confirmation of the selection of the RSVP display mode via said at least one input device (16).

## Description

### Technical Field

The present disclosure relates to the field of mobile wireless communications devices and, more particularly, to the use of rapid serial visual presentation to display content on mobile wireless communications devices.

### Background

Wireless communications systems continue to grow in popularity and have become an integral part of both personal and business communications. Mobile wireless communications devices allow users to place and receive voice calls most anywhere they travel. Moreover, as technology has increased, so too has the functionality of mobile wireless communications devices and the different types of devices available to users. For example, many mobile wireless communications devices now incorporate personal digital assistant (PDA) features such as calendars, address books, task lists, etc. Moreover, such mobile wireless communications devices may also allow users to wirelessly send and receive electronic mail (e-mail) messages or other text messages. Mobile wireless communications devices may further enable users to access the Internet via a cellular network and/or a wireless local area network (WLAN), for example.

As a result, users continue to spend more time using their mobile wireless communications devices during the course of a day performing reading e-mails, reading web sites, sending short message service (SMS) messages, etc., as opposed to early mobile wireless communications devices that were used only for voice calls. The use of a mobile wireless communications device for such functions, however, may present certain inconveniences to a user. For example, the display area of a mobile wireless communications device may be limited, which may increase the time spent reading an e-mail or web site, as the user may have to scroll through multiple pages to read the entire e-mail or web site. Additionally, a user with impaired vision or who requires reading glasses may have a difficult time reading smaller text on a display of a mobile wireless communications device. Accordingly, new methods of displaying content on a mobile wireless communications devices are desirable.

Rapid Serial Visual Presentation (RSVP) is a method of displaying textual content in which each word of the textual content is displayed in sequential order, one at a time, at a certain display rate, at a fixed location on a display. RSVP has been shown to increase a user's reading speed by removing the need for the users to move their eyes. As used herein, however, RSVP does not necessarily connote rapid displays of text or text displayed at any particular display rate. The display rate for text may be slow in some cases, enabling users having impaired vision to see the text.

Due to the limited display area required by RSVP, efforts have been made to adapt RSVP to mobile wireless communications devices to thereby allow a user to view textual content more quickly. "Reading Phone Text One Words at a Time", by Fried et al. (http://news.cnet.cam/2100-1046 3-5785579.html) discloses the use of RSVP to display textual content on the display of a mobile wireless communications device. In addition, this reference suggests the display of different word types for different periods of time, for example, displaying prepositions for a shorter period of time than proper nouns. Ways to take further advantage of the reading speed increase offered by RSVP may, however, be desirable.

U.S. Pat. Pub. 2007/0061720 to Kriger discloses a communications system comprising a network, a content provider, an RSVP server, and a mobile wireless communications device. The user may send a content request to the RSVP server via the mobile wireless communications device. The RSVP server then retrieves the content from the content provider, processes the content, and sends it to the mobile wireless communications device so that the mobile wireless communications device displays the content to the user with RSVP. This communications system, however, connects to a network and uses a RSVP server to format the content appropriately.

U.S. Pat. No. 7,159,172 to Bentley et al. discloses a device to display content to a user in a window using rapid serial visual presentation. To provide contextual information, a thumbnail view of the content is also generated and displayed in a separate window to indicate the location in the section of text of the word currently displayed using RSVP. This contextual information may increase the reading speed obtainable by a user. However, the display of a mobile wireless communications device may lack the size to properly implement the thumbnail views of Bentley et al.

Despite these advances in the adaptation of RSVP to mobile wireless communications devices, a desire remains for new techniques and methods of RSVP that further increase a user's reading speed and that may take advantage of various features of today's cellular phones.

### Brief Description of the Drawings

FIG. 1 is a schematic block diagram of a communications system including a mobile wireless communications device in accordance with the present disclosure.

FIGS. 2A-2F show the mobile wireless communications device of FIG. 1 displaying successive fragments of textual content.

FIGS. 3A-3F show the mobile wireless communications device of FIG. 1 displaying successive fragments of textual content.

FIGS. 4A-4C show the mobile wireless communications device of FIG. 1 displaying successive fragments of textual content.

FIG. 5 is a flowchart of a method of displaying textual content on a mobile wireless communications device in accordance with the present disclosure.

FIG. 6 is a flowchart of a more detailed method of displaying textual content on a mobile wireless communications device in accordance with the present disclosure.

FIGS. 7A-7D show a mobile wireless communications device accepting user input of a desired mode of display of the textual content in accordance with the present disclosure.

FIG. 8 shows a mobile wireless communications device displaying a notification or warning that RSVP of the textual content is about to commence in accordance with the present disclosure.

FIG. 9 shows a mobile wireless communications device varying a display orientation of a textual fragment based upon a physical orientation of the device in accordance with the present disclosure.

FIG. 10a shows a portion of a keypad of a mobile wireless communications device for dynamically adjusting RSVP playback of the textual content in accordance with the present disclosure.

FIG. 10b shows the control scheme implemented by the keypad of FIG. 10a.

FIG. 11 shows a mobile wireless communications device displaying an indication of the rate of RSVP display of the textual content in accordance with the present disclosure.

FIG. 12 is a flowchart of a method of displaying textual content on a mobile wireless communications device in accordance with the present disclosure.

FIG. 13 is a schematic block diagram illustrating exemplary components of a mobile wireless communications device in accordance of the present disclosure.

### Detailed Description

The present description is made with reference to the accompanying drawings, in which various example embodiments are shown. However, many different example embodiments may be used, and thus the description should not be construed as limited to the example embodiments set forth herein. Rather, these example embodiments are provided so that this disclosure will be thorough and complete. Like numbers refer to like elements throughout, and prime notation is used to indicate similar elements or steps in alternative example embodiments.

A mobile wireless communications device may comprise a wireless transceiver, a display, at least one input device, and a memory. A processor may cooperate with the wireless transceiver for downloading textual content comprising a plurality of words and storing the textual content in the memory. The processor may also cooperate with the memory for generating successive fragments of the textual content, each fragment typically comprising at least one word. A notification that a rapid serial visual presentation (RSVP) display mode has been selected may be displayed on the display. RSVP may be used for displaying on the display the successive fragments of the textual content based upon confirmation of the selection of the RSVP display mode via the input device.

The processor may also cooperate with the memory to display on the display a notification or warning that RSVP is about to begin. The warning may be a visual countdown. The processor may further cooperate with the memory for using RSVP for displaying on the display the successive fragments of the textual content based upon no input via the input device for a given period of time after displaying on the display the notification that RSVP has been selected.

The mobile wireless communications device may include an orientation sensor such as an accelerometer, a gravity sensor, a gyroscope, a tilt sensor, an electronic compass, or other suitable sensor, or combinations thereof. The orientation sensor generates a signal as a function of the orientation of the mobile wireless communications device with respect to the environment. An accelerometer, for example, is a sensor that converts acceleration from motion and gravity, which are detected by one or more sensing elements, into one or more digital or analog electrical signals.

The processor may generate a display orientation of the displayed fragments based upon the orientation of the display of the mobile wireless communications device, as sensed by the orientation sensor. That is, an orientation of the display, or a change in orientation of the display, can be detected by the orientation sensor, and the processor may change the manner in which the text is displayed as a function of the orientation of the display. In one example embodiment, the display orientation generated by the processor may comprise a diagonal orientation of text.

Additionally or alternatively, the processor may vary at least one display characteristic of the displayed fragments of the textual content during RSVP. The at least one display characteristic may comprise at least one of a display period, a display direction, and a display font size.

The processor, during RSVP of the textual fragments, may display on the display an indication of a display period of the textual fragments. Additionally or alternatively, the processor, during RSVP of the textual fragments, may display on the display an indication of an amount of remaining textual fragments to be displayed. The textual content may comprise at least one of an electronic mail (e-mail) message, short message service (SMS) message, a web page, a web feed, closed captions of a video file, and a document.

At least some of the fragments may comprise a plurality of words and the processor may vary display rates of the successive fragments during RSVP based upon associated fragment characteristics. The processor may generate the successive fragments based upon a word length of each word of the textual content and/or a length of each word of the textual content.

A method aspect is directed to method of displaying textual content on a mobile wireless communications device. The method may include downloading, using a wireless transceiver, textual content comprising a plurality of words and storing the textual content in a memory. The method may further include generating, using a processor, successive fragments of the textual content. Typically, each fragment comprises at least one word. For example, in cases of strings of short words, such as "of the," a fragment may include two words. The method may also include displaying on a display a notification that a rapid serial visual presentation (RSVP) display mode has been selected. Moreover, the method may include using RSVP for displaying on the display the successive fragments of textual content based upon confirmation of the selection of the RSVP display mode via the at least one input device.

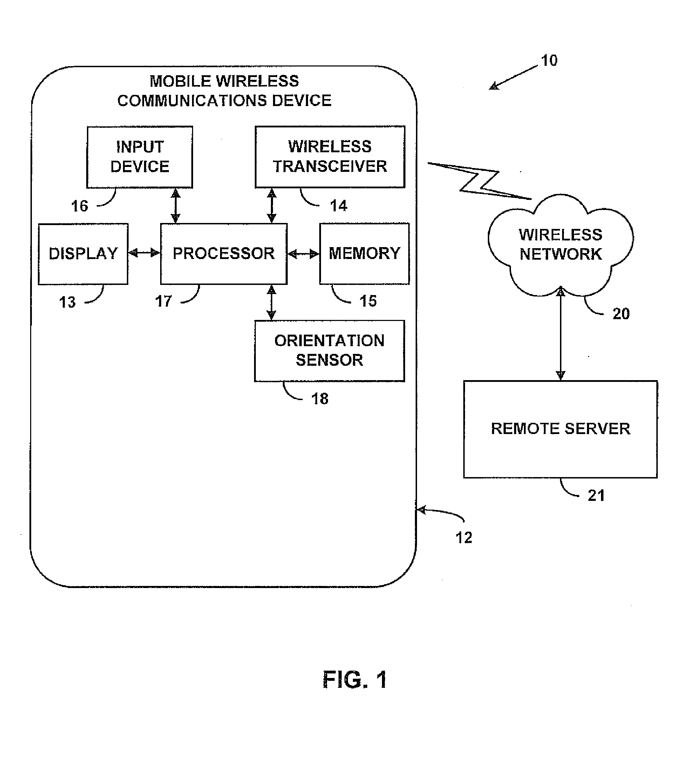

With reference to FIG. 1, a communications system **10** including a mobile wireless communications device **12** according to the present example embodiment is now described. The communications system **10** includes a wireless network **20**, that may typically be provided by a cellular telephone network. The mobile wireless communications device **12** comprises a processor **17** coupled to a display **13**, a wireless transceiver **14**, a memory **15**, and an input device **16**. The display **13** includes a display area, in which visual information can be presented to a user. The memory may be volatile memory, such as RAM, or non-volatile memory, such as flash RAM or a hard drive. The input device **16** may be one or more of a keyboard, a thumbwheel, or a trackball, for example. The input device **16** may also be a microphone or a wireless receiver (e.g. Bluetooth^{TM} -- a registered trademark of Bluetooth SIG, Inc.) The display 13 may be a touch sensitive screen and may therefore also serve as the input device **16.** The mobile wireless communications device **12** may further include an accelerometer or other orientation sensor **18** to cooperate with the processor **17** to determine a physical orientation of the device.

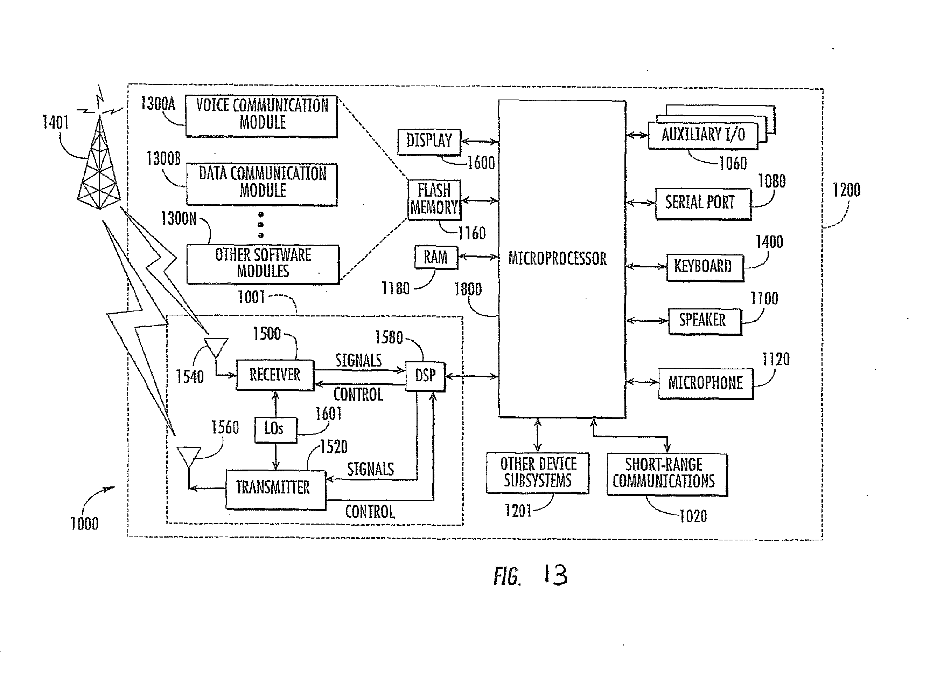

This disclosure is not limited to any particular mobile device, but may apply to any of several kinds of mobile devices. In addition, a more detailed example of a mobile device will be described with respect to FIG. 13 below. Further, the mobile wireless communications device **12** may include a housing, a power supply such as a rechargeable battery, a speaker, and other components not depicted in FIG. 1.

The processor **17** cooperates with the memory **15** and the wireless transceiver **14** for communicating with a remote server **21**. The mobile wireless communications device **21** may also communicate with a plurality of remote servers **21**. The remote server **21** illustratively stores textual content comprising a plurality of words. The textual content may be, for example, an electronic mail (e-mail) message, short message service (SMS) message, a web page, a web feed, closed captions of a video file, and/or a document.

The processor **17** cooperates with the wireless transceiver **14** for downloading from the remote server **21**, via the wireless network **20**, the textual content and storing the textual content in the memory **15**. The processor 17 cooperates with the memory **15** for generating successive fragments of the textual content, each fragment typically comprising at least one word. Some fragments may be only one word while other fragments may be two or more words.

In one example embodiment, the processor **17** identifies a longest fragment, from the fragments of the textual content. The processor 17 determines a selected font in which the longest fragment can be displayed on the display area of the display 13 based upon the size of the display area. This may be particularly advantageous because it may be undesirable for a word of the longest fragment to be hyphenated or for a word of the longest fragment to be cut off or displayed in part.

The selected font has a font size and a font style, for example, 18 point Times New Roman. The processor **17** selects a font comprising a font size for a given font style in which the longest fragment can be displayed on the display area of the display **13**. In some example embodiments, the processor **17** selects the font style as well. The processor **17** may have access to information about font styles, font sizes and the capabilities of the display **13** that is stored in the memory **15**. Using this information, the processor **17** can make calculations or determinations about whether a fragment of text can be fully displayed on the display **13** in a font style, with a font size, and with a device orientation. Different font styles of the same font size may take up a different amounts of space on a display **13**. In some applications, a selected font size may be a largest font size for a given font style in which the longest fragment can be displayed on the display area. As will be discussed below, the processor **17** may also be responsive to commands from the user to change aspects of the displayed text, such as the font size.

The processor **17** cooperates with the memory **15** for using RSVP for displaying on the display area of the display 13 the successive fragments of the textual content in the selected font. Displaying the textual content using RSVP advantageously allows a user to read the textual content more quickly, since eye movement is not required. Further, RSVP may be particularly useful when displaying textual content to a user who has less than optimal vision (e.g. a user who typically needs reading glasses) because a much larger font size may be used when displaying one fragment at a time as opposed to displaying the entire textual content simultaneously.

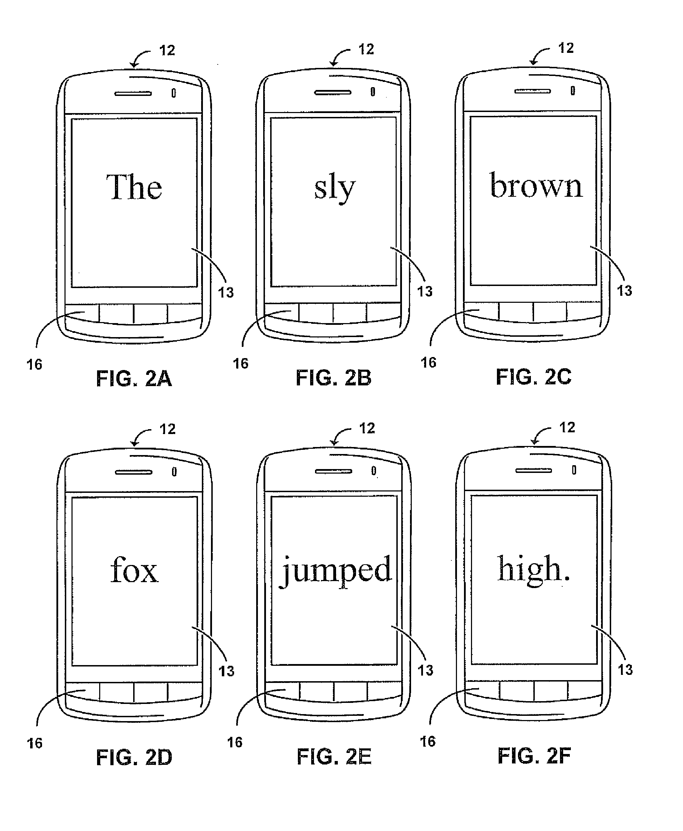

An example of the display of textual content on the display **13** of the mobile wireless communications device **12** is shown in FIGS. 2A-2F. In this example, the mobile wireless communications device **12** is in a portrait orientation. The textual content in this example is the sentence, "The sly brown fox jumped high," and each text fragment is a single word. As shown in FIGS. 2A-2F, one fragment of the textual content is shown on the display **13** at a time. Here, the longest fragment is "jumped," and the font has been selected to be the largest font size for the given font style in which this fragment can be displayed on one line of the display area of the display **13**.

The processor **17** may receive user input via the input device **16** of a desired RSVP font. The processor 17 may then use the desired RSVP font for the display of textual content using RSVP, but may switch back to a previous font when RSVP is completed. That is, a user may set a desired font to be used only for RSVP and that font setting may not affect display of other textual content when the processor 17 is not using RSVP. As will be describe below, the user may also provide input via the input device **16** that may change an aspect of the font, such as font size, during the display of text fragments using RSVP.

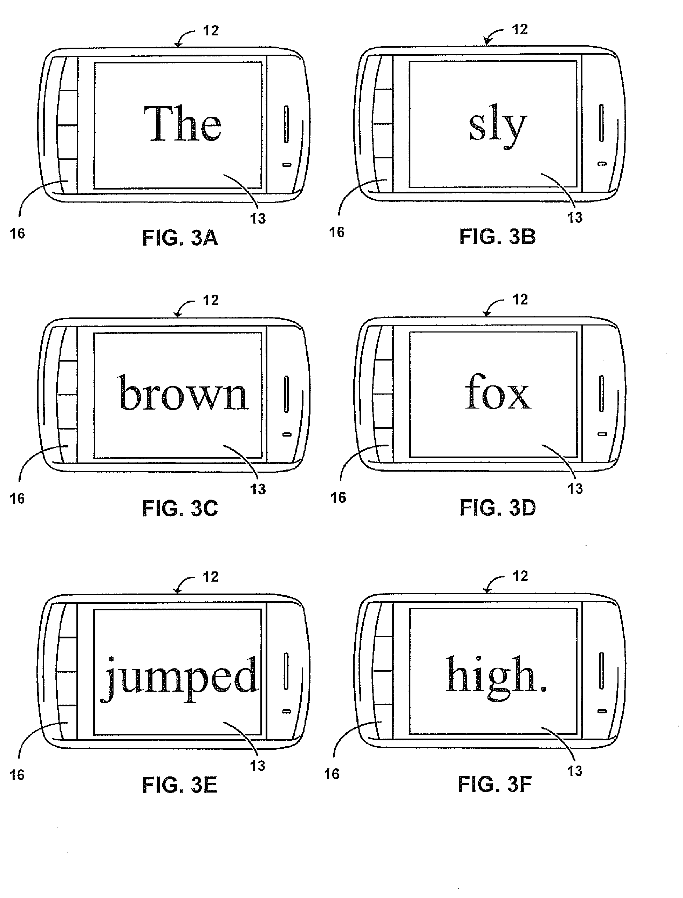

Another example of the display of textual content on the display **13** of the mobile wireless communications device **12** is shown in FIGS. 3A-3F. In this example, the mobile wireless communications device **12** is in a landscape orientation. The processor **17**, receiving signals from orientation sensor **18**, determines that the mobile wireless communications device **12** is oriented in such a way that text can be presented in a landscape configuration. The processor **17** further cooperates with the memory 15 for determining a selected font based upon the physical orientation and in which the longest fragment can be displayed on the display area of the display 13, with the display **13** being oriented in a landscape orientation. In this orientation, a larger size font may be usable to display the longest fragment. The fragments of the textual content, "The sly brown fox jumped high," shown in FIGS. 3A-3F (where the mobile wireless communications device **12** is in a landscape orientation) are illustratively in a larger font size than the fragments shown in FIGS. 2A-2F (where the mobile wireless communications device **12** is in a portrait orientation).

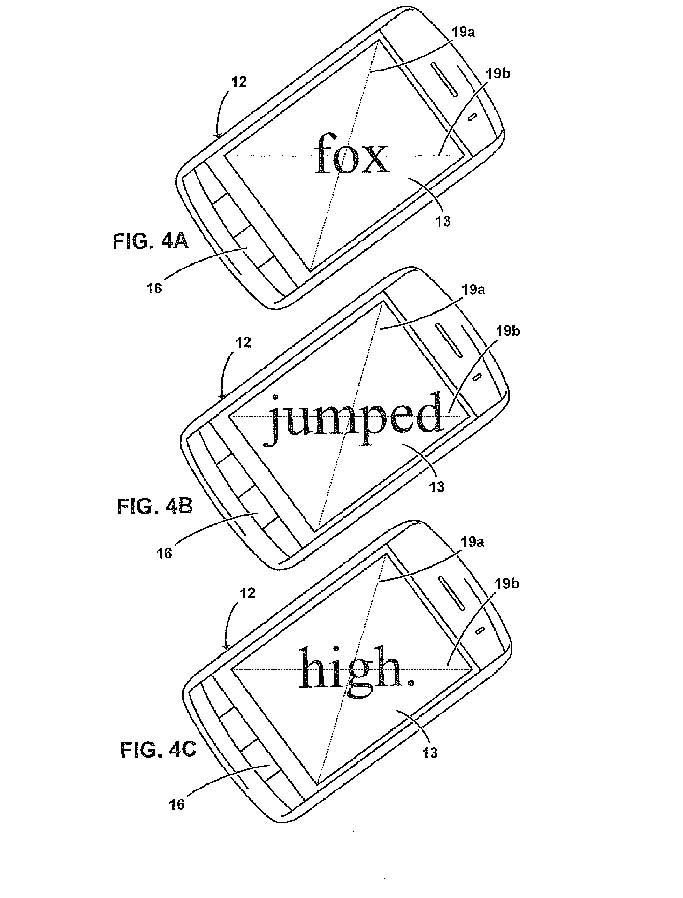

A further example of the display of textual content on the display **13** of the mobile wireless communications device **12** is shown in FIGS. 4A-4C. In this example (in which only fragments of "fox jumped high" are shown), the mobile wireless communications device **12** is oriented between a portrait orientation and a landscape orientation. The processor **17**, receiving signals from orientation sensor **18**, determines that the mobile wireless communications device **12** is oriented in such a way that text can be presented along a diagonal **19a, 19b** of display **13**. (The diagonal dashed lines **19a, 19b** may be actually displayed, but ordinarily would not be. The processor **17** further cooperates with the memory **15** for determining a selected font based upon the physical orientation and in which the longest fragment can be displayed on the display area of the display **13**, with the display 13 being oriented between a portrait orientation landscape orientation.

In this diagonal orientation, a larger size font may be usable to display the longest fragment than was used in either portrait orientation or landscape orientation. For example, if the display **13** has a 4:3 aspect ratio, it has a length of four units, a width of three units, and a diagonal of five units. Fragments of text displayed along a diagonal, therefore, may have significantly more space than the same fragments displayed in landscape mode or in portrait mode. The fragments may therefore be presented in a larger font size, making them easier to read.

In some example embodiments, the processor **17** may display text along a diagonal **19a, 19b** of the display **13** regardless of the actual physical orientation of the display. The compact nature of many wireless communications devices **12** enables them to be held in a user's hand and readily maneuvered into a position in which display of text along a diagonal **19a, 19b** may be more easily readable. In still further example embodiments, the processor 17 may display text along a first diagonal **19a** of display 13 when the mobile wireless communications device **12** is in a first orientation, and may display text along a second diagonal **19b** of display **13** when the mobile wireless communications device **12** is in a second orientation.

As depicted in FIGS. 4A-4C (and in FIGS. 2A-2F and 3A-3F), the display **13** of the wireless communications device **12** is large in relation to the overall size of the wireless communications device **12**. The wireless communications device **12** includes a set of keys 16 but does not include a full keyboard. As will be described below, the techniques of this disclosure may be applied to wireless communications devices **12** that include keyboards and different display configurations.

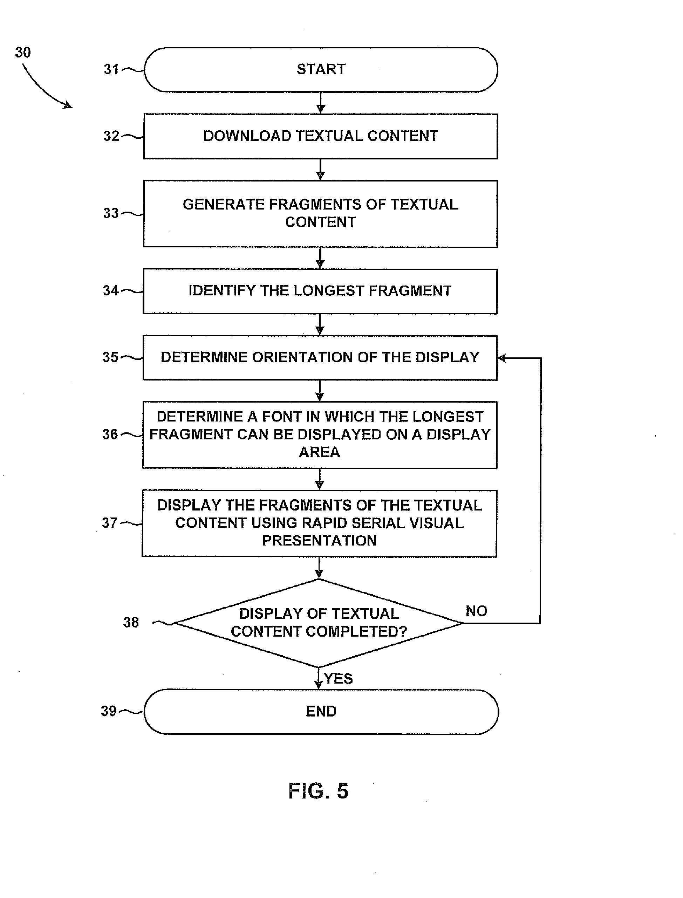

With reference to the flowchart **30** in FIG. 5, a method of displaying textual content comprising a plurality of words on a mobile wireless communications device is now described. After the start (Block **31**), at Block **32** the textual content is downloaded, as described above. At Block **33**, successive fragments of the textual content are generated. For purposes of illustration, each fragment comprises at least one word. At Block **34**, the successive fragments are searched to locate a longest fragment. The longest fragment may be, but need not be, the fragment having the most letters. In some cases, a longer word may actually take less space to display than a shorter word, due to the disparate widths of the individual alphanumeric characters in a particular font.

At Block **35**, an orientation of the display is detected via an orientation sensor. At Block 36, a selected font in which the longest fragment can be displayed on a display area of a display of the mobile wireless communications device is determined. Typically, selecting the font includes selecting a font style and a font size. In some implementations, the font style may be preselected, that is, the font style may be a default font style or a font style previously selected by a user for presentation of text in this fashion. A font may be selected for any number of features. For example, a serif font may be favored as being less likely to confuse the capital "I," the numeral "1" and the lower case letter "1." The amount of space available in display area for the longest fragment may therefore be a function of the orientation of the display. A larger font size may be selected when the display is in landscape orientation as opposed to portrait orientation, and a still larger font size may be selected when the display is between landscape orientation and portrait orientation.

At Block **37**, the successive fragments of the textual content are displayed on the display area of the display in the selected font and using rapid serial visual presentation. The fragments may be displayed in portrait mode, landscape mode, or along a diagonal. Optionally, the successive fragments of the textual content are displayed based upon the orientation of the display. If display of the textual content is complete at Block **38**, the method ends at Block **39**. If display of the textual content is incomplete at Block **38**, the orientation of the display is against determined at Block **35** and the method continues therefrom until display of the textual content is complete. Block 39 indicates the end of the method.

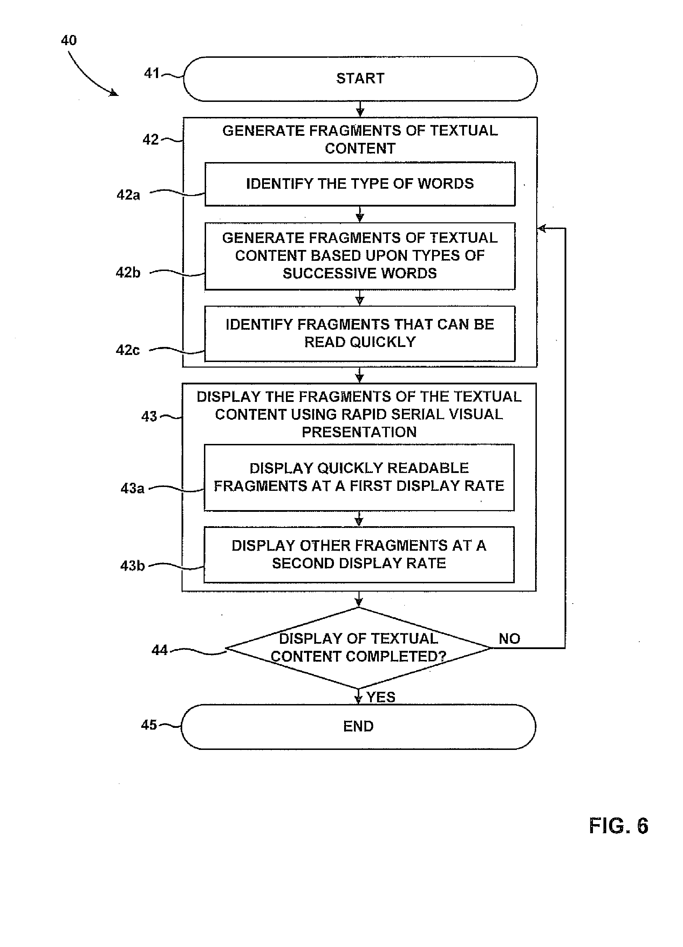

With reference to flowchart 40 in FIG. 6, an illustrative example embodiment of a method for generating fragments of textual content and displaying the fragments is now described. After the start (Block **41**), at Block **42** fragments of textual content are generated. In particular, at Block **42a**, word types of the words in the textual content are identified. The word type may be an article, a preposition, a noun, a pronoun, a verb, an adverb, or an adjective, for example. Based upon the word types of successive words, two or more words may be grouped into a single fragment.

This step is performed because studies have shown that not all words are read with equal care. For example, articles, prepositions, and various short words (e.g. "that," "this," "is," "are," "do") are read more quickly than other words. At Block **42b**, fragments of textual content are generated based upon types of successive words, and at Block **42c**, fragments that can be read quickly are identified.

A collection of words that are less carefully read can be stored in a lookup table. In the generation of fragments based upon types of successive words, a regular word may be combined with a word that is less carefully read, such as "a computer." A fragment, which may be a single word or may be two or more words, may be encountered that includes mostly words that are not carefully read. Such fragments may be used to generate a fragment that can be read very quickly.

As an illustration, the textual content may be the sentence "I am the monarch of the sea." A first fragment may be generated that comprises three short, quickly readable words, "I am the" and form a first text fragment from these three words. The first fragment may be identified as one that can be read quickly. A second fragment may be generated from a single word, "monarch." Since monarch is a longer word, and since it is unlikely to be in the table of words that are quickly read, the word "monarch" can be a fragment by itself. A third fragment may be generated from the next two words, "of the," and may further identify the third fragment as one that can be read quickly. In addition, a fourth fragment may be generated from a single word, "sea." Although "sea" is a short word, "sea" may be separated into fragment distinct from "of the" because "sea" may not be in the table of easily readable words.

In this way, the successive fragments are generated based upon characteristics of the words in the textual content. Characteristics include word lengths (generally a function of the number of letters in the word or its length when written in a particular font), word frequencies (generally the number of times that a word appears in the textual content, with frequently repeated words often being more capable of being quickly read), and/or whether or not a word or combination of words can be more quickly read than ordinary words. A further characteristic is word occurrence, which is similar to word frequency. In general, word occurrence pertains to the number that a word has been displayed during RSVP. Since a user may learn a word after reading it multiple times (and thus be able to read it more quickly), the display rate of a fragment containing a word that has been displayed a given number of times may be changed. In text content that repeatedly uses the word "computer," for example, the first occurrence of a fragment comprising "computer" might be displayed at the second, slower, rate, as may the second, third and fourth occurrences of a fragment comprising "computer." The fifth occurrence, however, may be identified as being quickly readable, because the word "computer" has appeared several times already. As a result, the first, faster, display rate to the fifth occurrence of a fragment comprising "computer," as well as to subsequent fragments.

At Block 43, the fragments of the textual content are displayed using rapid serial visual presentation. As further shown by Blocks 43a and 43b of FIG. 6, fragments having quickly readable words can be displayed using RSVP at a first display rate and other fragments can be displayed at a second display rate. In a typical implementation, the second display rate will be (in terms of fragments displayed per unit of time) lower than the first display rate. In other words, when easily readable fragments are displayed, they will be presented for a shorter period of time than other fragments. In general, most fragments would probably be displayed at the second display rate, which may be thought of as the "default" or "normal" display rate. In the example of the textual content "I am the monarch of the sea" that has been separated into four fragments as described previously, the first and third fragments may be displayed at a first display rate in which they are on the display for a shorter period of time than the second and fourth fragments, which may be displayed at a second display rate.

Varying the display rates (or the inverse, the display periods) of successive fragments is particularly advantageous as it allows an even greater increase in reading speed. Words that can be read more quickly are presented more quickly. Further, by combining two or more quickly readable words into a single fragment, reading speed can be increased even further. Accordingly, the RSVP methods of the present example embodiment may allow a user to read textual content even more quickly than would be possible with other RSVP techniques.

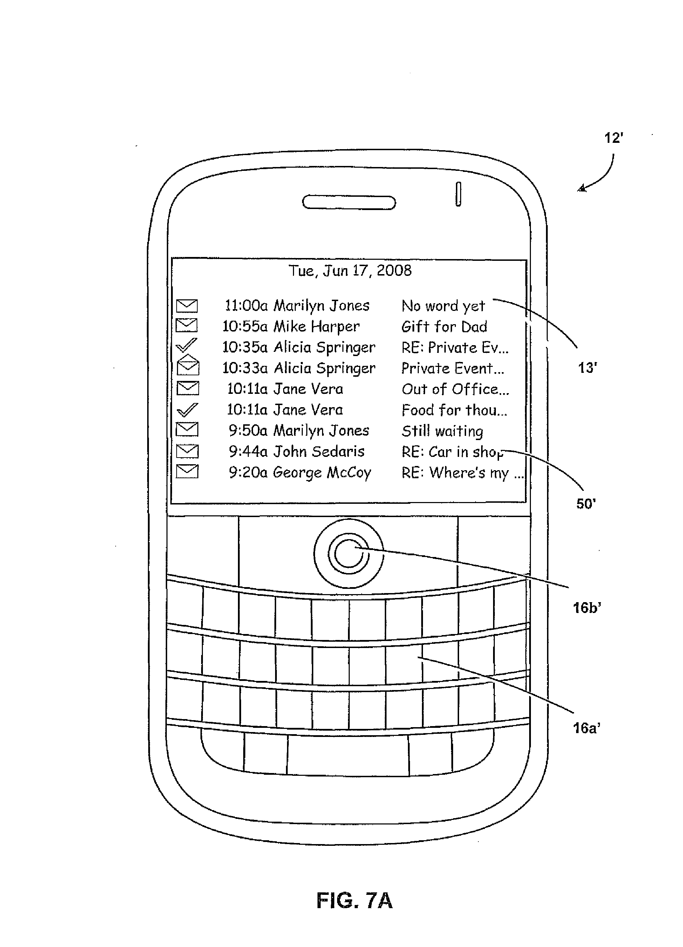

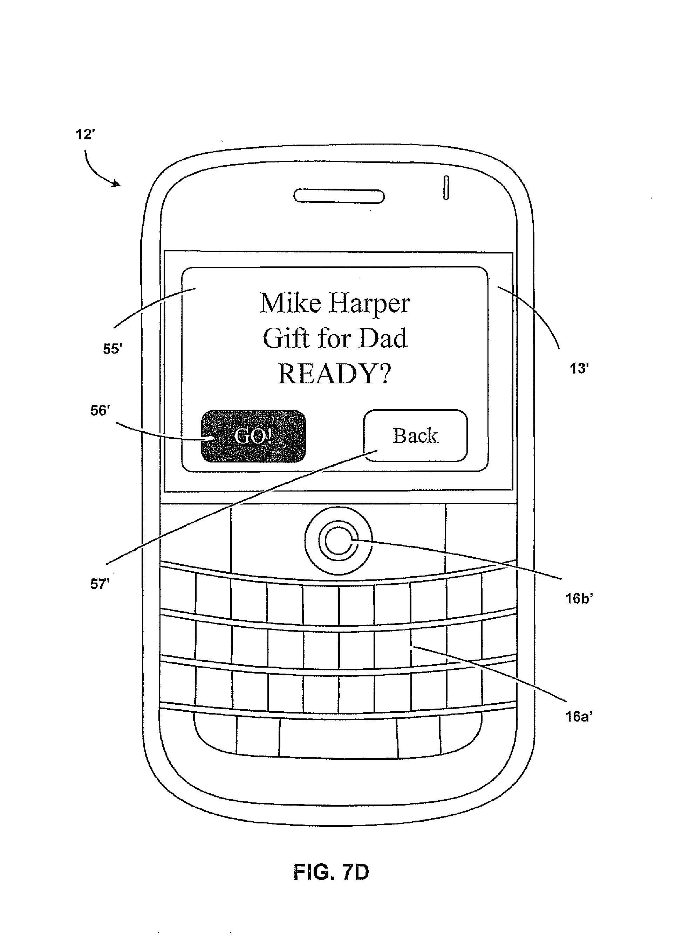

Operation of a mobile wireless communications device **12'** according to the present disclosure is illustrated in the example of FIGS. 7A-7D. Before beginning, it should be understood that the mobile wireless communications device **12'** has technical features similar to that of the mobile wireless communications device **12** of FIG. 1 and that those features need no further discussion herein. As such, it should be understood that when the mobile wireless communications device **12'** is described as performing a function, the processor, memory, and various other components thereof are cooperating to perform that function.

As illustrated in FIGS. 7A-7D, the mobile wireless communications device **12'** may be a model different from that depicted in FIGS 2A-4C. In particular, the mobile wireless communications device **12'** includes a keypad **16' ,** which may comprise a full keyboard, and a clickable trackball **16'.** Accordingly, the techniques described herein may be adapted to displays of a variety of sizes and input devices of a variety of configurations.

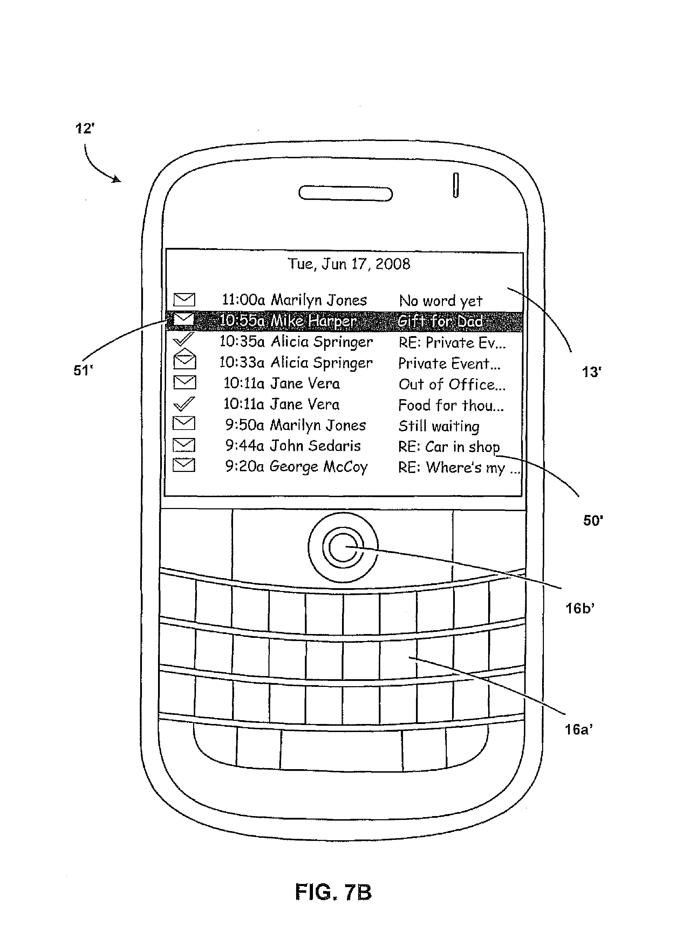

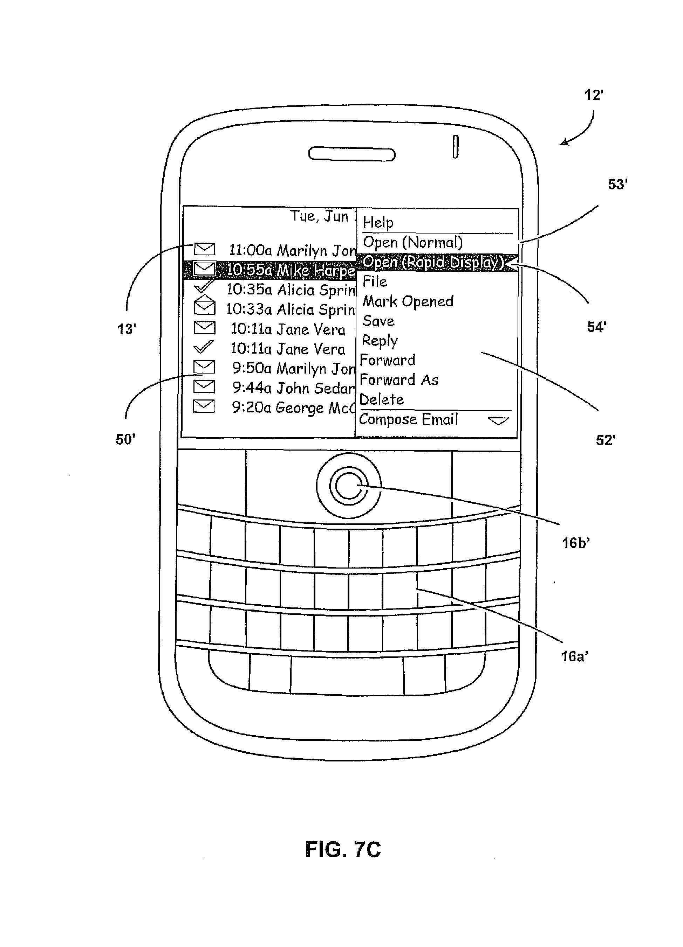

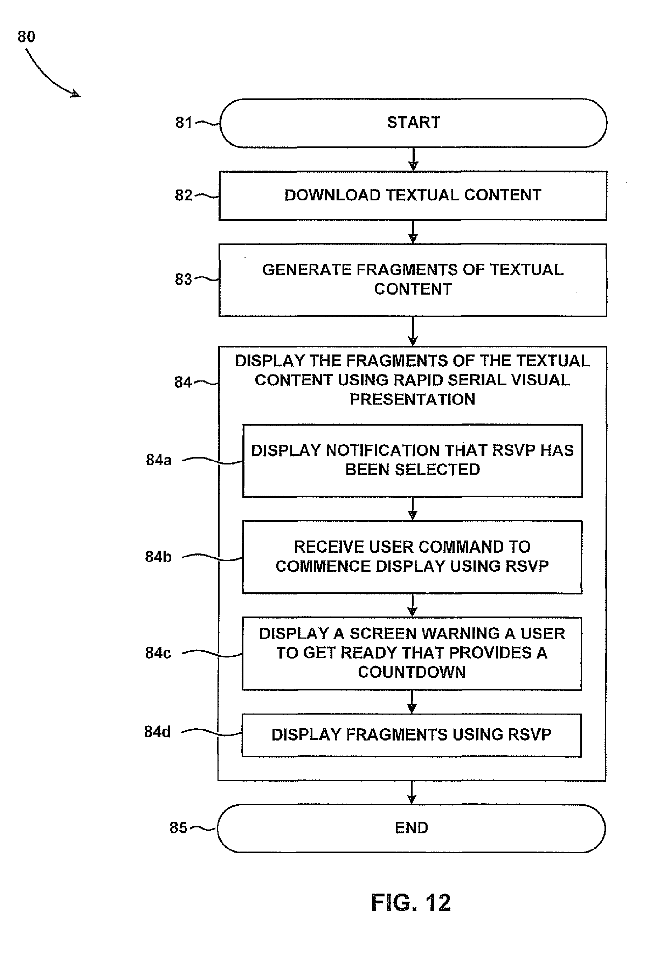

In FIG. 7A, the mobile wireless communications device **12'** is displaying a plurality of e-mail messages **50'.** Selection of a particular e-mail message **51',** illustratively from Mike Harper and entitled "Gift for Dad," is shown in FIG. 7B. In Figure **7C****,** the mobile wireless communications device **12'** presents the user with a menu **52'** of options for opening the e-mail of interest. A first option **53'** involves opening the e-mail and presenting its text in a conventional way. A second option **54'** involves opening the e-mail and presenting its text using RVSP. User selection of the RSVP display mode for viewing this e-mail message is shown in FIG. 7C. In FIG. 12D, the mobile wireless communications device **52'** displays a dialog box **55',** which is one form of a notification or warning that notifies the user that RSVP has been selected. The dialog box **55**reads "Mike Harper Gift For Dad READY?" and prompts the user to enter input indicating whether the user wants to confirm initiating the RSVP display of fragments by selecting the option "GO!" **56'** or cancel the RSVP display by selecting the option "Back" **57'.** This advantageously allows a user to revert to a normal mode of viewing if, for example, selection of RSVP mode was a mistake or is no longer desired. Further, this gives a user time to prepare for reading an e-mail or other textual content presented via RSVP. Either option **56'** or **57'** may be a default option, and the mobile wireless communications device **12'** may be configured to select the "Back" option **57'** automatically if no user selection is performed within a particular period of time. That is, the mobile wireless communications device **12'** unselects the RSVP display mode after a given period of time if the user makes no selection.

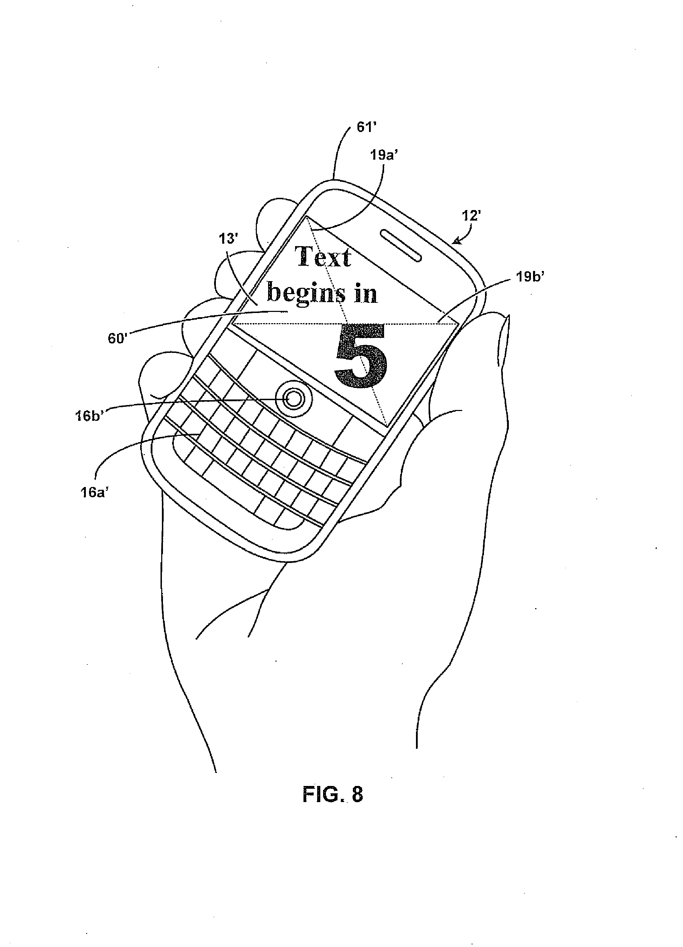

In some example embodiments, the display of the dialog box **55'** may be omitted, or may be supplemented with a further display, such as a "get-ready" presentation **60'** as shown in FIG. 8. The "get-ready" presentation **60'** advises the user that RSVP of the textual content is about to begin. For example, as shown in FIG. 8, the mobile wireless communications device **12'** may display "Text begins in" on the display **13',** accompanied by a countdown. In FIG. 8, the count-down is depicted as a written numeral, which may indicate the number of seconds before RSVP of the textual content is about to begin. The get-ready presentation, which may include a countdown, may also be presented audibly, or haptically, or graphically (such as by using shrinking stripe or slider bar or other indicator), or any combination thereof. At the end of the countdown, RSVP of the textual content (as described above) would commence. In one variation, the user may give a command via an input device to skip the get-ready presentation and begin the RSVP presentation immediately.

As depicted in FIG. 8, the text of the "get ready" display **60'** is presented in alignment with a diagonal **19b'** of the display **13'**. Displaying the "get ready" display **60'** diagonally can indicate to the user that fragments of text are to be displayed diagonally using RSVP. In some example embodiments, the mobile wireless communications device **12'** may display text along a diagonal 19a', **19b'** of the display **13'** regardless of the orientation the mobile wireless communications device **12'**. In other example embodiments, the mobile wireless communications device **12',** through use of its orientation sensor, determines its physical orientation and may vary a display orientation of the displayed textual fragments based upon the physical orientation. For example, as shown in FIG. 14, the mobile wireless communications device 12' may be held at an angle such that the upper left corner **61'** of the mobile wireless communications device 12' is uppermost. The mobile wireless communications device **12'** then prepares to display the fragments of the textual content at a corresponding diagonal orientation.

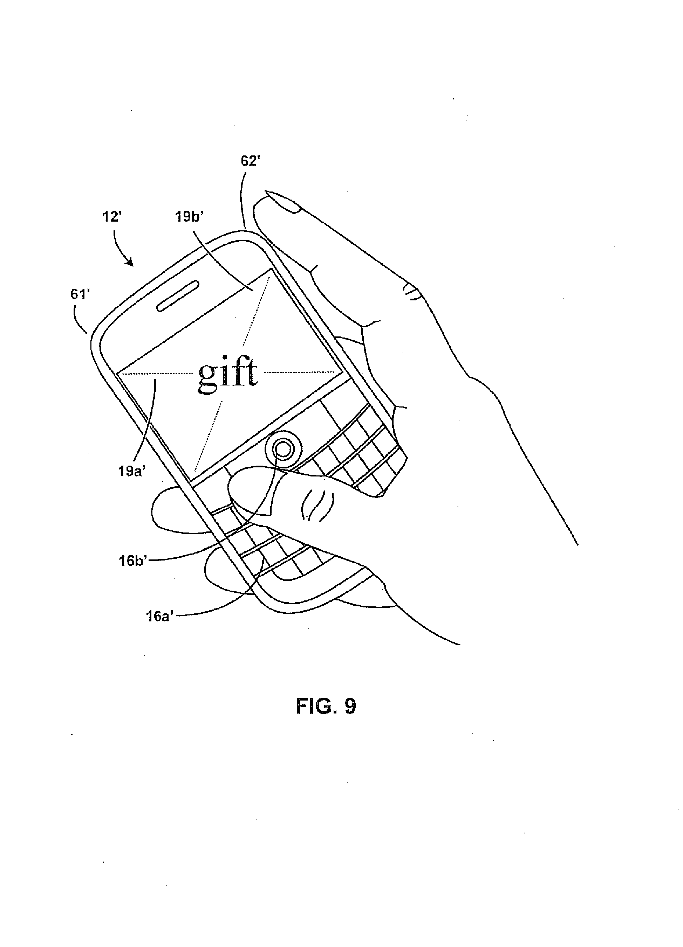

As depicted in FIG. 9, the mobile wireless communications device **12'** may optionally determine a change in its physical orientation and may vary at least one display characteristic of the textual fragments during RSVP based upon the change in physical orientation of the mobile wireless communications device. That is, a user may move the mobile wireless communications device **12'** in a given direction and the mobile wireless communications device **12',** through use of its orientation sensor, may interpret these movements as a change in orientation. In FIG. 9, the user has moved the mobile wireless communications device **12'** such that the upper left corner **61'** of the mobile wireless communications device **12'** is no longer uppermost, but the upper right corner **62** of the mobile wireless communications device **12'** is uppermost. The mobile wireless communications device **12'** consequently no longer displays fragments of text along the original diagonal 19b', but shifts to displaying the fragments along a different diagonal 19a'. In this way, the mobile wireless communications device **12'** displays fragments in an orientation that is more likely to be easily read by the user.

In some example embodiments, the mobile wireless communications device **12'** may interpret a change in orientation as an input. That is, a user may tilt, shake, or otherwise move the mobile wireless communications device 12' in a given direction and the mobile wireless communications device **12',** using its orientation sensor to sense these movements, may then interpret these movements as a command to change a display characteristic. Such gesture-based inputs may be used to dynamically adjust other display characteristics of the RSVP, for example, to increase or decrease the rate at which fragments are displayed on the display **13'.** Additionally, the RSVP may be rewound, advanced, paused, restarted, or stopped in response to these gesture inputs. Moreover, the font style and font size used for RSVP may be adjusted with these gesture inputs.

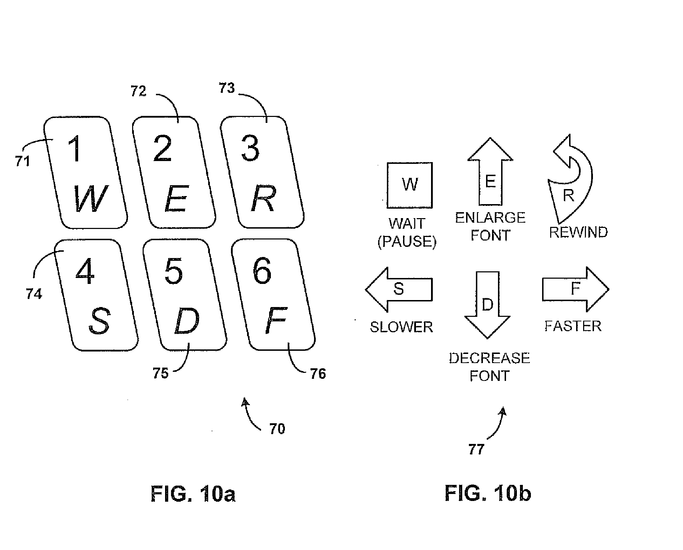

Instead of or in addition to the gesture-based inputs, the mobile wireless communications device **12'** may receive user input via one or more of the input devices **16a', 16b'**. FIGS. 10a-10b depicts an illustrative mapping of selected keys **71-76** from the keypad **16a'** to respective functions **77**. In response to a user input via one or more of the keys **71-76,** the mobile wireless communications device **12'** may dynamically adjust at least one parameter of the RSVP. For example, in response to user input received via the keypad 16a', the mobile wireless communications device **12'** may increase or decrease the rate at which fragments are displayed, or may rewind, advance, pause, restart, or stop the RSVP.

For example, as shown in FIG. 10a-10b, in response to input received via the "W" key 71 of the keypad 16a', the mobile wireless communications device **12'** may "wait," that is, RSVP may be paused. Likewise, in response to input received via the "E" key 72, the font used for RSVP may be enlarged. Further, in response to input received via the "R" key **73**, the RSVP may be rewound. Also, in response to input received via the "S" key **74,** the rate of display of the fragments during RSVP may be reduced to a slower speed. Further, in response to input received via the "D" key **75**, the font used for RSVP may be decreased in size. Moreover, in response to input received via the "F" key **76**, the rate of display of the fragments during RSVP may be increased.

One potential advantage of the mapping **77** is that keys assigned to related functions are close to one another on the keypad **16a'**. Thus, the key commanding the font to be enlarged is above the key commanding the font to be decreased. A further potential advantage is that the functions are mnemonically related to the letters,"S" to "slower," "F" to "faster, "R" to "rewind," and so forth. Icons such as the arrows shown in mapping 77 may be printed on the actual keys to further remind the user of the mapping of the functions.

The "rewind" function may, for example, jump backward in the RSVP display by a set time or set number of fragments. Activation of the "rewind" function can typically better serve the user as an "instant replay" of the past few fragments, allowing the user an opportunity to catch text that the user may have missed the first time. Activation of the "rewind" function will not necessarily run the fragments in reverse order. Further, activation of the "wait" function can be adapted to present text fragments according to commands from the user. In other words, the user activates the "wait" function (it may also be mnemonically called the "word" function) to display each fragment, and the mobile wireless communications device **12'** will not present a successive fragment until commanded to do so by the user.

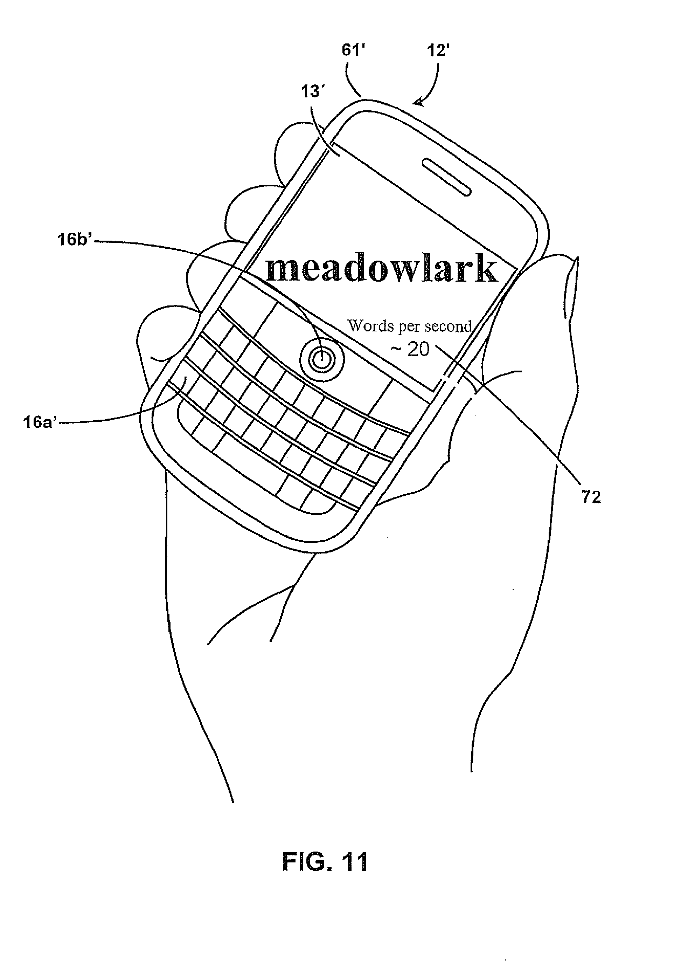

During RSVP, the mobile wireless communications device **12'** may provide a user with audio feedback indicating the rate at which fragments are being displayed with RSVP. For example, the mobile wireless communications device **12'** may cause a speaker to emit a tick or other sound when each fragment is displayed. User feedback may also comprise visual feedback on the display **13'**. As illustrated in FIG. 11, the mobile wireless communications device **12'** may display a number 72 indicating the display rate, for example in the lower right corner of the display. The display rate may be in any convenient units, such as words per second, and need not be precise. Alternatively, a slider bar may be displayed on the display **13'**. This slider bar may indicate the display rate or may indicate the percentage of the textual content that has been displayed (or that has not been displayed) using RSVP.

With reference to the flowchart 80 of FIG. 12, a method of displaying textual content on a mobile wireless communications device is now described. Displaying fragments with RSVP was previously discussed with respect to FIG. 5, and FIGS. 10a-10b provide a number of variations of that presentation. After the start (Block 81), at Block **82** textual content is downloaded, and at Block 83, fragments of the textual content are generated. At Block **84**, the fragments of the textual content are displayed using RSVP. Before the actual RSVP display begins, at Block **84a**, a notification is displayed on a display that RSVP has been selected in response to user selection of a rapid serial visual presentation (RSVP) display mode received via the at least one input device. At Block **84b**, a user command is received via the input device that the display via RSVP may commence. A "get-ready" display may be presented at Block **84c** to allow the user a brief time to prepare for the RSVP presentation. The get-ready presentation may include a countdown as described above. RSVP is used, at Block **84d**, for displaying on the display the successive fragments in response to user confirmation of the user selection of the RSVP display mode received via the at least one input device.

Those skilled in the art will understand that display of fragments via RSVP may also include displaying an indicator of the display rate, as described above. Display of fragments via RSVP may further include receiving user commands to change a parameter of the RSVP display, and obeying the command, as described above. Display of fragments via RSVP may additionally include detecting an orientation or a change in orientation of the display, and adjusting the presentation of text fragments as a function of the orientation or change in orientation, as was described above.

It should be understood that the RSVP techniques of the aforementioned example embodiments may be used together in combination and that features of these example embodiments are not mutually exclusive. For example, successive fragments may be generated based upon word lengths and/or word types, and a selected font in which the longest fragment may be displayed be determined. RSVP may then be used to display the fragments, and the display periods of successive fragments may be varied based upon associated fragment characteristics.

Exemplary components of a hand-held mobile wireless communications device **1000** that may be used in accordance with the present disclosure are further described in the example below with reference to FIG. 13. The device **1000** illustratively includes a housing 1200, a keypad **1400** and an output device **1600.** The output device shown is a display **1600**, which may comprise a full graphic LCD. In some example embodiments, display 1600 may comprise a touch-sensitive input and output device. Other types of output devices may alternatively be utilized. A processing device **1800** is contained within the housing **1200** and is coupled between the keypad **1400** and the display **1600**. The processing device **1800** controls the operation of the display **1600**, as well as the overall operation of the mobile device **1000,** in response to actuation of keys on the keypad **1400** by the user. In some example embodiments, keypad **1400** may comprise a physical keypad or a virtual keypad (e.g., using a touch—sensitive interface) or both.

The housing **1200** may be elongated vertically, or may take on other sizes and shapes (including clamshell housing structures). The keypad **1400** may include a mode selection key, or other hardware or software for switching between text entry and telephony entry.

In addition to the processing device **1800**, other parts of the mobile device **1000** are shown schematically in FIG. 13. These include a communications subsystem **1001;** a short-range communications subsystem **1020;** the keypad 1400 and the display **1600**, along with other input/output devices **1060, 1080, 1100** and **1120;** as well as memory devices 1160, **1180** and various other device subsystems **1201**. The mobile device **1000** may comprise a two-way RF communications device having voice and data communications capabilities. In addition, the mobile device **1000** may have the capability to communicate with other computer systems via the Internet.

Operating system software executed by the processing device **1800** may be stored in a persistent store, such as the flash memory **1160**, but may be stored in other types of memory devices, such as a read only memory (ROM) or similar storage element. In addition, system software, specific device applications, or parts thereof, may be temporarily loaded into a volatile store, such as the random access memory (RAM) **1180**. Communications signals received by the mobile device may also be stored in the RAM **1180.**

The processing device **1800**, in addition to its operating system functions, enables execution of software applications **1300A-1300N** on the device **1000**. A predetermined set of applications that control basic device operations, such as data and voice communications 1300A and 1300B, may be installed on the device **1000** during manufacture. In addition, a personal information manager (PIM) application may be installed during manufacture. The PIM may be capable of organizing and managing data items, such as e-mail, calendar events, voice mails, appointments, and task items. The PIM application may also be capable of sending and receiving data items via a wireless network **1401.** The PIM data items may be seamlessly integrated, synchronized and updated via the wireless network **1401** with the device user's corresponding data items stored or associated with a host computer system.

Communication functions, including data and voice communications, are performed through the communications subsystem **1001**, and possibly through the short-range communications subsystem. The communications subsystem **1001** includes a receiver **1500**, a transmitter **1520**, and one or more antennas **1540** and **1560.** In addition, the communications subsystem **1001** also includes a processing module, such as a digital signal processor (DSP) **1580**, and local oscillators (LOs) **1601**. The specific design and implementation of the communications subsystem **1001** is dependent upon the communications network in which the mobile device **1000** is intended to operate. For example, a mobile device **1000** may include a communications subsystem **1001** designed to operate with the Mobitex^{TM}, Data TAC^{TM} or General Packet Radio Service (GPRS) mobile data communications networks, and also designed to operate with any of a variety of voice communications networks, such as AMPS, TDMA, CDMA, WCDMA, PCS, GSM, EDGE, etc. Other types of data and voice networks, both separate and integrated, may also be utilized with the mobile device 1000. The mobile device **1000** may also be compliant with other communications standards such as 3GSM, 3G, UMTS, 4G, etc.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore utilizes a subscriber identity module, commonly referred to as a SIM card, in order to operate on a GPRS network.

When required network registration or activation procedures have been completed, the mobile device 1000 may send and receive communications signals over the communication network **1401**. Signals received from the communications network **1401** by the antenna **1540** are routed to the receiver **1500**, which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter 1520 for digital to analog conversion, frequency up conversion, filtering, amplification and transmission to the communication network **1401** (or networks) via the antenna **1560.**

In addition to processing communications signals, the DSP **1580** provides for control of the receiver 1500 and the transmitter **1520**. For example, gains applied to communications signals in the receiver **1500** and transmitter 1520 may be adaptively controlled through automatic gain control algorithms implemented in the DSP **1580.**

In a data communications mode, a received signal, such as a text message or web page download, is processed by the communications subsystem **1001** and is input to the processing device **1800**. The received signal is then further processed by the processing device 1800 for an output to the display **1600**, or alternatively to some other auxiliary I/O device **1060**. A device user may also compose data items, such as e-mail messages, using the keypad **1400** and/or some other auxiliary I/O device **1060,** such as a touchpad, a rocker switch, a thumb-wheel, track ball, or some other type of input device. The composed data items may then be transmitted over the communications network 1401 via the communications subsystem **1001.**

In a voice communications mode, overall operation of the device is substantially similar to the data communications mode, except that received signals are output to a speaker **1100**, and signals for transmission are generated by a microphone **1120**. Alternative voice or audio I/O subsystems, such as a voice message recording subsystem, may also be implemented on the device **1000**. In addition, the display **1600** may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem may include an infrared device and associated circuits and components, or a Bluetooth^{TM} communications module to provide for communication with similarly-enabled systems and devices.

Many modifications and other example embodiments of the disclosure will come to the mind of one skilled in the art having the benefit of the teachings presented in the foregoing descriptions and the associated drawings. Therefore, it is understood that the disclosure is not to be limited to the specific embodiments disclosed, and that modifications and embodiments are intended to be included within the scope of the appended claims.

## Claims

1. A mobile wireless communications device (12) comprising:
a wireless transceiver (14);
a display (13);
at least one input device (16);
a memory (15); and
a processor (17) cooperating with said wireless transceiver for downloading textual content comprising a plurality of words and storing the textual content in said memory;
said processor also cooperating with said memory for
generating successive fragments of the textual content, each fragment comprising at least one word,
displaying on said display a notification that a rapid serial visual presentation (RSVP) display mode has been selected, and
using RSVP for displaying on said display the successive fragments of the textual content based upon confirmation of the selection of the RSVP display mode via said at least one input device.

2. The mobile wireless communications device (12) of Claim 1 wherein said processor (17) unselects the RSVP display mode based upon no input received via said at least one input device (16) for a given period of time after displaying on said display (13) the notification that RSVP has been selected.

3. The mobile wireless communications device (12) of Claim 1 wherein said processor (17) further cooperates with said memory (15) to display on said display (13) a warning that RSVP is about to begin.

4. The mobile wireless communications device (12) of Claim 3 wherein the warning that RSVP is about to begin comprises a visual countdown.

5. The mobile wireless communications device (12) of Claim 1 further comprising an orientation sensor (18); and wherein said processor (17) generates a display orientation of the displayed fragments of the textual content based upon said orientation sensor.

6. The mobile wireless communications device (12) of Claim 5 wherein the display orientation generated by the processor (17) comprises a diagonal orientation.

7. The mobile wireless communications device (12) of Claim 1 wherein said processor (17), during RSVP of the textual fragments, displays on said display (13) an indication of a display rate of the textual fragments.

8. The mobile wireless communications device (12) of Claim 1 wherein at least some of the fragments comprise a plurality of words; and wherein said processor (17) and said memory (15) cooperate to vary display rates of the successive fragments during RSVP based upon associated fragment characteristics.

9. The mobile wireless communications device (12) of Claim 8 wherein said processor (17) generates the successive fragments based upon at least one of a word type of each word of the textual content and a length of each word of the textual content.

10. The mobile wireless communications device (12) of Claim 1 wherein the textual content comprises at least one of an electronic mail message, short message service (SMS) message, a web page, a web feed, and a document.

11. A method of displaying textual content on a mobile wireless communications device (12) comprising:
downloading, using a wireless transceiver (14), textual content comprising a plurality of words and storing the textual content in a memory (15).
generating, using a processor (17), successive fragments of the textual content, each fragment comprising at least one word;
displaying, on a display (13), a notification that a rapid serial visual presentation (RSVP) display mode has been selected; and
using RSVP for displaying, on the display, the successive fragments of textual content based upon confirmation of the selection of the RSVP display mode via the at least one input device (16).

12. The method of Claim 11 further comprising display on the display (13) a warning that RSVP is about to begin.

13. The method of Claim 12 wherein the warning that RSVP is about to begin comprises a visual countdown.

14. The method of Claim 11 further comprising varying at least one display characteristic of the textual fragments during RSVP based upon an device orientation sensor (18), the at least one display characteristic comprising at least one of a display period, a display direction, and a display font size.

15. The method of Claim 11 further comprising varying a display orientation of the displayed fragments based upon a device orientation sensor (18).
